# EUROPÄISCHE PATENTSCHRIFT

(11) **EP 1 859 519 B1**
(45) Veröffentlichungstag und Bekanntmachung des Hinweises auf die Patenterteilung: **19.09.2012**
(21) Anmeldenummer: 06723029.2
(22) Anmeldetag: 10.02.2006
(51) Int. Cl.: H02B 1/21

(54) **GERÄTE-ODER ANSCHLUSSADAPTER**
DEVICE OR CONNECTION ADAPTER
ADAPTATEUR DE CONNEXIONS OU D'APPAREILS

(30) Priorität: 04.03.2005 DE 102005009992
(43) Veröffentlichungstag der Anmeldung: 28.11.2007
(73) Patentinhaber: Rittal GmbH & Co. KG, 35745 Herborn (DE)
(72) Erfinder: WAGENER, Hans, 35716 Dietzhölztal (DE)
(74) Vertreter: Tönhardt, Marion
(86) Internationale Anmeldenummer: PCT/EP2006/001255
(87) Internationale Veröffentlichungsnummer: WO 2006/094599

(56) Entgegenhaltungen:
- DE-A1- 10 300 723
- US-A- 4 646 199

## Beschreibung

Die Erfindung betrifft einen Geräte- oder Anschlussadapter mit einem Basisteil, in dem Kontaktiereinheiten mit Anschlusskontakten zur elektrischen Kontaktierung mit Stromsammelschienen eines Sammelschienensystems aufgenommen sind, und mit einer Haltevorrichtung zum lösbaren Festlegen des Geräteadapters bezüglich des Sammelschienensystems sowie eine Verwendung eines solchen Adapters.

Geräte- oder Anschlussadapter dieser Art sind in Verbindung mit Sammelschienensystemen mit Montageeinheit in mannigfacher Ausgestaltung bekannt, wie die DE 103 00 723 A1, die DE 93 06 013 U1 und die DE 100 61 939 A1 zeigen. Dabei sind die Verbindungs- und/oder Rastelemente an den Sammelschienenhaltern, der Plattform der Montageeinheit und den Geräte- oder Anschlussadaptern einstückig angeformt und dienen nur der mechanischen Verbindung aufeinander abgestimmter Montageeinheiten und Geräte- oder Anschlussadapter. Dies engt den Einsatzbereich der Adapter beachtlich ein. So. kann z.B. ein installiertes System mit einer in bestimmter Weise ausgelegten Montageeinheit nicht mit unterschiedlichen Geräte- oder Anschlussadaptern verbunden werden.

Es ist daher Aufgabe der Erfindung, einen Geräte- oder Anschlussadapter bereitzustellen, dessen Anwendungs- und Variationsbereich erweitert ist und eine vorteilhafte Verwendungsmöglichkeit anzugeben.

Diese Aufgabe wird mit den Merkmalen der Ansprüche 1 bzw. 13 gelöst. Hierbei ist vorgesehen, dass die Haltevorrichtung unterschiedliche modulartige, an dem Basisteil zumindest zum Teil lösbar anbringbare Verbindungsmittel und Klemmfüße aufweist, um den Geräteadapter wahlweise an einer Tragvorrichtung des Sammelschienensystems oder unmittelbar an mindestens einer Stromsammelschiene mechanisch festzulegen.

Mit diesen Maßnahmen kann der Adapter mit dem selben Basisteil und einfach anzukoppelnden unterschiedlichen Verbindungselementen bei einfachem Aufbau und einfacher Bedienung wahlweise direkt mit den Stromsammelschienen oder mit einer die Stromsammelschienen aufnehmenden Plattform mechanisch verbunden werden, wobei eine sichere elektrische Kontaktierung gewährleistet ist.

Ein Vorteil der Erfindung ergibt sich auch durch die Verwendung eines solchen Geräte- oder Anschlussadapters bei einem Sammelschienensystem mit einer Montageeinheit, die in isolierenden Sammelschienenhaltern oder einer isolierenden Plattform mehrere beabstandete Stromsammelschienen aufnimmt.

Eine vorteilhafte Ausgestaltung des Adapters besteht dabei darin, dass ein Teil der Verbindungsmittel auf einer Schmalseite an dem länglich und näherungsweise quaderförmig geformten Basisteil angebracht ist und ein weiterer Teil der Verbindungsmittel auf der gegenüberliegenden Schmalseite des Basisteils angebracht ist und dass die Verbindungsmittel zumindest einer Schmalseite Rastelemente aufweisen. Die aufeinander abgestimmten Verbindungsmittel auf den beiden Schmalseiten des Adapters ergeben eine einfache Handhabung bei der Anbringung und eine sichere Ankopplung.

Für die Verbindung beispielsweise an Rändern einer wannenförmigen Aufnahme der Plattform bestehen vorteilhafte Ausführungsformen darin, dass die sich gegenüberliegenden Verbindungsmittel beider Schmalseiten des Geräteadapters gegeneinander gerichtete oder voneinander weg gerichtete Verbindungsabschnitte besitzen.

Für den Aufbau und die Bedienung bei unterschiedlicher Verwendung sind des Weiteren die Maßnahmen von Vorteil, dass zumindest auf einer Schmalseite des Geräteadapters das oder die Verbindungsmittel an einem mit dem Basisteil lösbar verbundenen oder verbindbaren Ansatzstück angebracht ist/sind.

Dabei bestehen verschiedene Ausgestaltungsvarianten darin, dass das mindestens eine Ansatzstück mit dem Basisteil im angekoppelten Zustand verrastet, zusammengesteckt und/oder verschraubt ist.

Weiterhin sind für den Aufbau und die Handhabung die Maßnahmen vorteilhaft, dass auf einer Schmalseite des Geräteadapters das Verbindungsmittel einstückig mit dem Basisteil über einen daran angeformten Schmalseitenabschnitt verbunden ist.

Zum einfachen Festlegen an mindestens einer Stromsammelschiene besteht ein günstiger Aufbau darin, dass der mindestens eine Klemmfuß hakenförmig zum Hintergreifen der zugeordneten Stromsammelschiene bzw. eines Abschnitts derselben an der betreffenden Unterseite des Basisteils lösbar angebracht oder anbringbar ist.

Die Ankopplung des Klemmfußes kann dabei auf einfache Weise dadurch erfolgen, dass der mindestens eine Klemmfuß an einem an der Unterseite des Basisteils angeformten Wandansatz verrastet, angeschraubt und/oder angesteckt ist.

Ein weiterer Vorteil wird hierbei dadurch erreicht, dass der Wandansatz eine Sammelschienenaufnahme an der Unterseite des Basisteils seitlich begrenzt.

Zu einer sicheren Fixierung des Adapters an Stromsammelschienen tragen die Maßnahmen bei, dass zur seitlichen Begrenzung einer dem Wandansatz zugekehrten Seite gegenüberliegenden Seite einer zuzuordnenden Stromsammelschiene in mindestens eine Sammelschienenaufnahme ein senkrecht zur Unterseite des Basisteils verstellbares oder verschwenkbares Verriegelungselement hineinragt, das in dem Basisteil gelagert ist.

Der Aufbau und die Bedienung werden dabei weiterhin dadurch begünstigt, dass das Verriegelungselement entfernbar ist.

Sowohl die mechanische Festlegung als auch die elektrische Kontaktierung an den Sammelschienen werden dadurch unterstützt, dass zur elektrischen Kontaktierung mit den Stromsammelschienen die Anschlusskontakte in dem Basisteil federnd abgestützt sind.

Zur schnellen und einfachen Herstellung der mechanischen Verbindung bei der Verwendung des Adapters ist vorgesehen, dass die als Rastelemente ausgebildeten Verbindungselemente der Geräte- oder Anschlussadapter in dem Geräte- oder Anschlussadapter abgefedert und begrenzt parallel zu der Befestigungsfläche der Montageeinheit und senkrecht zu den Stromsammelschienen verstellbar sind und dass die mit einer Rastschräge und Rastspitze versehenen Rastelemente der Geräte- oder Anschlussadapter beim Aufsetzen des Geräte- oder Anschlussadapters auf die Montageeinheit in eine Rastaufnahme der Plattform der Montageeinheit oder eine Rastaufnahme eines Sammelschienenhalters einrasten.

Die Erfindung wird anhand von in den Zeichnungen dargestellten Ausführungsbeispielen näher erläutert. Es zeigen:
- Fig. 1: in Seitenansicht ein Sammelschienensystem aus einer Montageeinheit mit Plattform und einem aufgesetzten, nur an der Plattform gehaltenen Anschlussadapter,
- Fig. 2: in Seitenansicht ein Sammelschienensystem nach Fig. 1, bei dem der Anschlussadapter an Stromsammelschienen gehalten ist,
- Fig. 2A: in vergrößerter Teilansicht einen Ausschnitt des Sammelschienensystems nach Fig. 2 mit modifiziertem Verriegelungselement und Fixierung des Adapters an einer Stromsammelschiene sowie einseitiger Anbindung an der Plattform,
- Fig. 3: den Anschlussadapter nach Fig. 1,
- Fig. 4A, 4B und 4C: verschiedene perspektivische Darstellungen zweier unterschiedlich ausgestatteter Adapter in verschiedenen auseinander genommenen Darstellungen und
- Fig. 5: einen zusammengebauten Zustand der zwei unterschiedlich zusammengesetzten Adapter nach den Fig. 4A bis 4C.

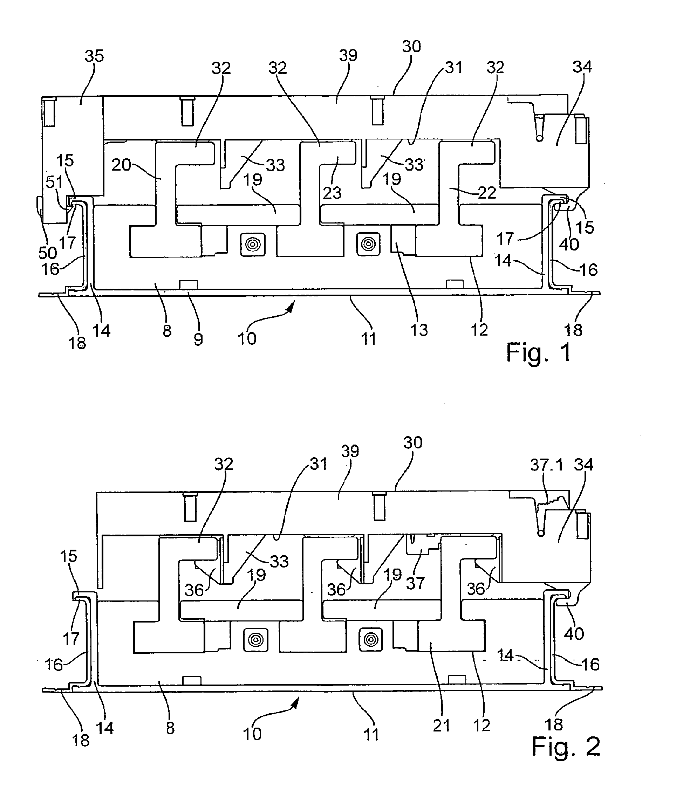

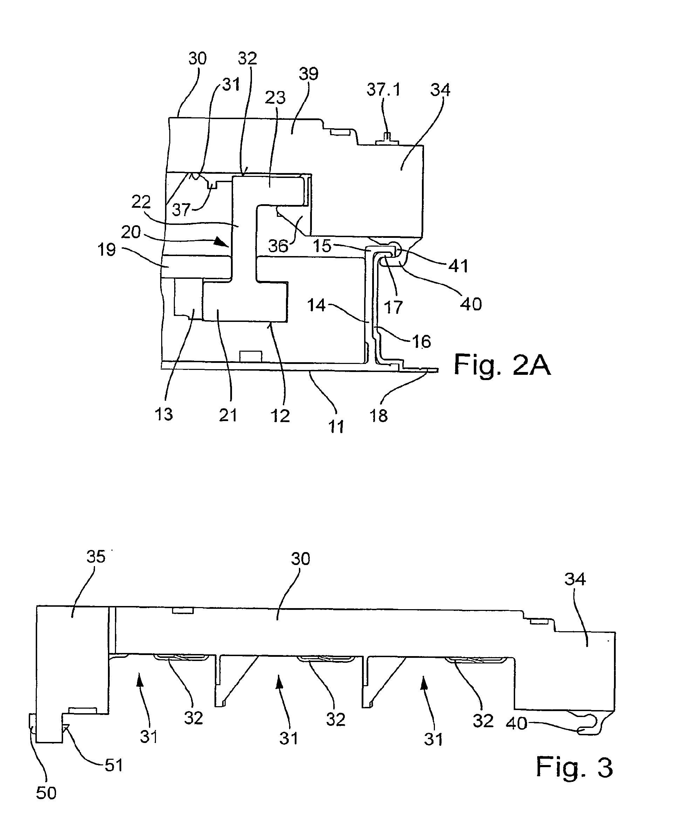

Wie das Ausführungsbeispiel nach Fig. 1 zeigt, sind in der Plattform 11 der Montageeinheit 10 drei beabstandete Stromsammelschienen 20 isoliert festgelegt. Dabei kann die Plattform 11 eine Art Wanne 9 aufweisen und sich über die gesamte Länge der Stromsammelschienen 20 erstrecken. Die Plattform 11 kann auch mit mehreren in der Wanne 9 angeordneten isolierenden Sammelschienenhaltern 8 ausgerüstet oder durch mehrere isolierende Sammelschienenhalter ersetzt sein, die in Längsrichtung der Stromsammelschiene 20 beabstandet sind. An den zu den Stromsammelschienen 20 parallelen Seiten der Wanne bzw. Plattform 11 sind Verbindungselemente 14 und 16 angebracht, wobei die Verbindungselemente 14 und 16 dem Geräteadapter 30 zugekehrt in Steckelemente in Form von Halteabschnitten 15 und 17 auslaufen, die z.B. parallel zur Befestigungsfläche der Wanne 9 nach außen gerichtet sind. Die Befestigung auf einer Unterlage erfolgt dabei beispielsweise über Befestigungsflansche 18 der Verbindungselemente 16. Ähnlich können die Halteabschnitte 15 und 17 auch durch freie Endabschnitte von nach außen abgewinkelten Endabschnitten der schmalen Wannenränder gebildet sein. Die Befestigung des Geräteadapters 30 erfolgt nach Fig. 1 an den Halteabschnitten 15, 17 auf der einen Seite mit einem hakenartigen Verbindungselement 40 und auf der anderen Seite mit einem lösbaren, beispielsweise rastbaren Verbindungsmittel 50 mit Rastnase 51 an einem Ansatzstück 35 auf der betreffenden Schmalseite des Geräteadapters 30, wie die Fig. 1 und 3 zeigen.

Vorliegend sind die Stromsammeischienen 20 mit einem Fuß 21 in Aufnahmen 12 der Sammelschienenhalter 8 oder der Plattform 11 eingesetzt, wobei Füllstücke 13 die Aufnahmen 12 ausfüllen und Abdeckplatten 19 die Füße 21 und die Füllstücke 13 festlegen. An der Oberseite der Montageeinheit 10 stehen die Stromsammelschienen 20 mit Abschnitten 22 und 23 L-förmig ab. Der Geräte- oder Anschlussadapter 30 weist an der der Montageeinheit 10 zugekehrten Seite drei Sammelschienenaufnahmen 31 auf, in die die elektrischen Anschlusskontakte 32 ragen. Die Wandansätze 33 teilen die Sammelschienenaufnahmen 31 ab und können abnehmbare Klemmfü-βe 36 tragen (Fig. 2), die die Endabschnitte 23 der Stromsammelschienen 20 hintergreifen. Die Klemmfüße 36 können am Geräte- oder Anschlussadapter 30 eingerastet sein. Dabei kann zumindest in einer Sammelschienenaufnahme 31 neben dem Kontaktelement 32 ein federbelastetes Verriegelungselement 37 in die Sammelschienenaufnahme 31 ragen, wie die Fig. 2, 2A und 3 zeigen. Das Verriegelungselement 37 legt sich hinter den Übergang vom Endabschnitt 23 zu dem Abschnitt 22 der Stromsammelschiene 20 und stellt sicher, dass der Geräte- oder Anschlussadapter 30 auf der Montageeinheit 10 gehalten wird, auch wenn kein Verriegelungsmittel 51, wie etwa das Verbindungsmittel 50, zum Sichern an der Plattform 11 oder den Sammelschienenhaltern 8 vorgesehen ist. Ist ein Verriegelungsmittel zum Sichern an der Plattform 11 vorhanden, kann das zusätzliche Verriegelungselement 37 weggelassen werden, wie Fig. 1 zeigt. Auch die Verwendung flacher Stromsammelschienen kommt in Betracht.

Wie die linke Seite der Fig. 1 und 2 und die vergrößerte Teilansicht nach Fig. 2A zeigen, werden nach der Aufsteckbewegung die Steckelemente 15 und 17 der Verbindungselemente 14 und 16 in das Verbindungselement 40 am Geräte- oder Anschlussadapter 30 eingeführt und eine mechanische Verbindung zwischen der Montageeinheit 10 und dem Geräte- oder Anschlussadapter 30 erreicht. Das Verbindungselement 40 kann dabei fest oder lösbar und austauschbar am Schmalseitenende 34 des Geräte- oder Anschlussadapters 30 angebracht sein. Diese mechanische Verbindung stellt sicher, dass der Geräte- oder Anschlussadapter 30 sicher bezüglich der Befestigungsfläche der Montageeinheit 10 fixiert ist.

Wie aus den Fig. 1 und 3 ersichtlich, trägt das der Schmalseite bzw. dem Schmalseitenabschnitt 34 mit dem Verbindungselement 40 gegenüberliegende Schmalseitenende des Geräte- oder Anschlussadapters 30 das Ansatzstück 35. Dieses trägt als Verbindungsmittel ein Rastelement 50 mit Rastschräge zum Auslenken beim Aufsetzen und Rastnase 51 zum Halten im eingesetzten Zustand. Das Rastelement 50 ist in dem Ansatzstück 35 abgefedert und begrenzt im Wesentlichen parallel zur Befestigungsfläche der Montageeinheit 10 und senkrecht zu den Längsseiten der Stromsammelschienen 20 verstellbar. Ist das Verbindungselement 40 durch eine Seitwärtsbewegung auf die flanschartigen Halteabschnitte 15 und 17 der Montageeinheit 10 aufgesteckt bzw. eingehakt, dann kann auf der Gegenseite das Rastelement 50 über die Rastschräge 50 durch eine Schwenkbewegung so ausgelenkt werden, dass die Rastspitze bzw. Rastnase 51 seitwärts bewegt wird und anschließend der zugeordnete Halteabschnitt 17 hintergriffen wird. Die mechanische Verbindung zwischen dem Ge-räte- oder Anschlussadapter 30 und der Montageeinheit 10 ist dann auf einfache Weise sicher hergestellt. Sie kann nur durch Rückstellung des Rastelements 50 wieder gelöst werden.

Es bleibt noch zu erwähnen, dass es für die Verbindungs- und/oder Rastelemente sowie für ihre lösbare und austauschbare Verbindung an den Sammelschienenhaltern, der Montageeinheit und den Geräte- oder Anschlussadaptern im Einzelnen eine Vielzahl möglicher Ausführungsvarianten gibt.

Ist an dem Geräte- oder Anschlussadapter 30 entsprechend Fig. 2 und 2A mindestens ein Klemmfuß 36 angebracht und auch mindestens ein verstellbares Verriegelungselement 37 vorhanden, kann er an Stromsammelschienen 20 gesichert festgelegt werden, ohne dass die Verbindungs- und/oder Rastelemente 40, 50 an ihm angebracht sind. Dies ergibt variable Einsatzmöglichkeiten.

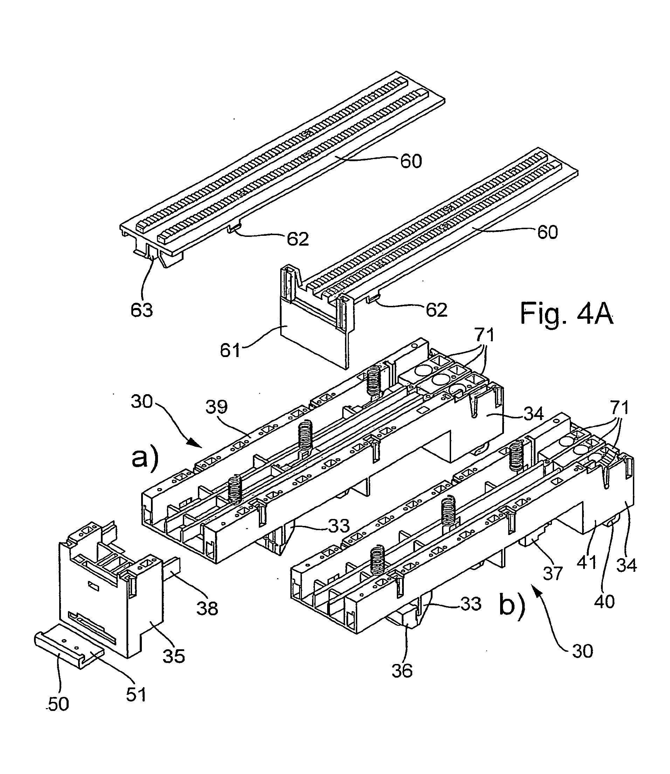

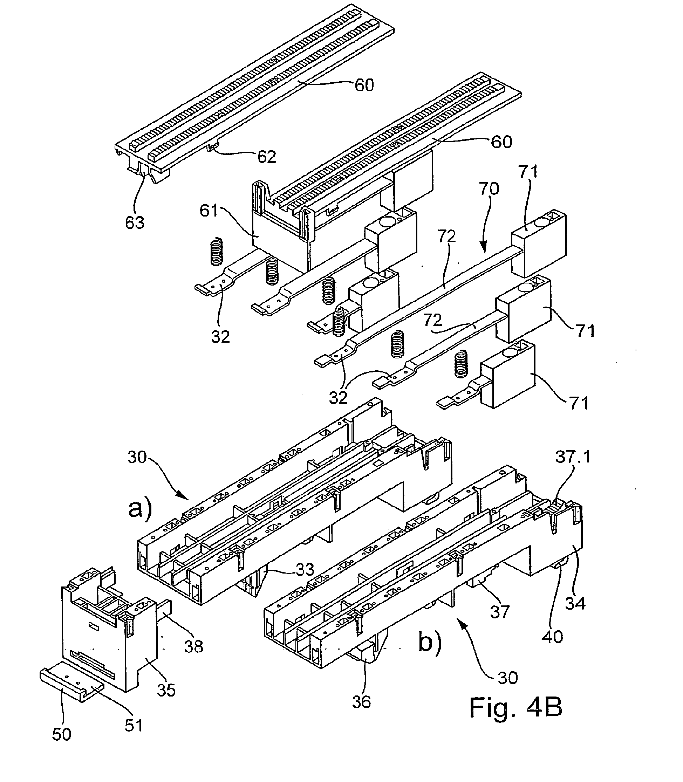

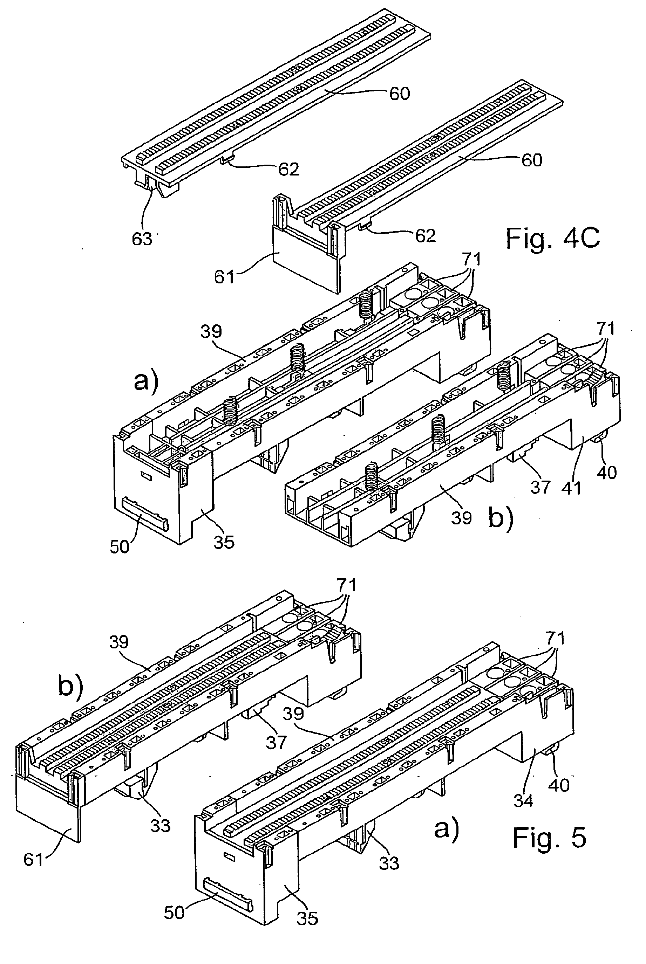

Die Fig. 4A, 4B und 4C zeigen zwei in verschiedener Weise mit Verbindungsmitteln 40, 50 und Klemmfüßen 36 ausgestaltete Geräteadapter 30 in verschiedenen auseinander genommenen Zuständen stets mit demselben Basisteil 31 in perspektivischer Darstellung. Fig. 5 zeigt die beiden Ausgestaltungen des Geräteadapters 30 im zusammengebauten Zustand ebenfalls in perspektivischer Darstellung.

Die allein an der Plattform 11, nämlich den nach außen abgewinkelten beiderseitigen Halteabschnitten 15, 17 festlegbaren Ausgestaltungsvarianten des Geräteadapters 30 sind dabei in den Teilbildern a) dargestellt, während die an den Stromsammelschienen 20 festlegbaren Ausgestaltungsvarianten des Geräteadapters 30 in den Teilbildern b) wiedergegeben sind. Wie insbesondere die Fig. 4A und 4B erkennen lassen, sind die mit den Rastelementen 50 ausgestatteten Verbindungsmittel an dem Ansatzstück 35 an dessen der Plattform zugekehrtem unterem Abschnitt ausgebildet, wobei das Rastelement 50 mit der Rastnase 51 als separates Element in eine schlitzförmige Aussparung des Ansatzstückes 35 eingesetzt und darin federnd gelagert ist, um zum Herstellen und Lösen der Rastverbindung seitlich parallel zur Ebene der Plattform 11 ausgelenkt werden zu können. Das Ansatzstück 35 ist in seinem oberen Abschnitt der betreffenden Schmalseite des Basisteils 39 zugekehrt mit seitlichen Steckzapfen 38 versehen, die in daran angepasste Ausnehmungen im Bereich der Längsseitenteile des Basisteils 39 einsteckbar und darin festlegbar, beispielsweise verrastbar sind. Der Schmalseitenabschnitt 34 auf der gegenüberliegenden Seite des Basisteils 39 ist an diesem einstückig angeformt und trägt auf seiner Unterseite das daran ebenfalls angeformte Verbindungselement 40 mit der hakenartigen Steckaufnahme 41 für den daran angepassten Halteabschnitt 15, 17. Zum Ankoppeln des so ausgestatteten Geräteadapters 30 an der Plattform wird zunächst das Verbindungselement 40 an dem betreffenden Halteabschnitt 15, 17 durch eine Verschiebebewegung in Ebenenrichtung der Plattform eingehängt und dann durch eine Schwenkbewegung die Rastverbindung auf der gegenüberliegenden Schmalseite des Geräteadapters 30 an dem betreffenden Halteabschnitt 15, 17 hergestellt, wobei das Rastelement 50 entgegen der Federkraft mittels der Rastschräge an der Rastnase 51 zurückgeschoben wird und dann durch die Federkraft unter Hintergreifen des Halteabschnittes 15, 17 in die Raststellung einrastet.

In dem Basisteil 39 sind auch längs verlaufende Aufnahmen für Kontaktierfedern 72 eingeformt, die in Anschlussstücken 71 mit geeigneten Leitern verbunden werden und zusammen eine Kontaktiereinheit 70 bilden. Die Anschlussstücke 71 sind dabei in angepassten Aussparungen des Schmalseitenabschnittes 34 aufgenommen, wie aus Fig. 4A in Verbindung mit Fig. 4B sowie auch Fig. 4C ersichtlich. Auf der Oberseite des Basisteils 39 wird eine Aufbauplatte 60 angebracht, wozu Rastfedern 62 und Rasthaken an der Unterseite der Aufbauplatte 60 angeformt sind, die in daran angepasste Ausnehmungen in der Oberseite des Basisteils 39 eingreifen. Weitere Rasthaken 63 sind so ausgebildet, dass sie mit dem Ansatzstück 35 zusammenwirken. An der Unterseite der Aufbauplatte 60 stützen sich Schraubenfedern gegen die Anschlusskontakte 32 der Kontaktierfedern 72 ab, so dass eine sichere Kontaktierung an den Stromsammelschienen 20 hergestellt wird und dabei auch die gegebenenfalls dort vorgenommene mechanische Verbindung unterstützt wird. Auf der Oberseite der Aufbauplatte 60 oder diese seitlich begrenzenden Leisten können weitere Verbindungsmittel zur Aufnahme von Geräten angebracht werden.

Bei der zur Anbringung an den Stromsammelschienen 20 ausgestatteten Ausgestaltungsvariante des Geräteadapters 30 nach den Teilbildern b) ist, wie auch aus Fig. 2 ersichtlich, das Ansatzstück 35 nicht vorhanden. Stattdessen ist an der Aufbauplatte 60 eine Abschlussplatte 61 angeformt oder abnehmbar angebracht, die dann anstelle des Ansatzstückes 35 einen einfachen schmalseitigen Abschluss des Geräteadapters 30 bildet. Zur Festlegung an den Stromsammelschienen 20 ist diese Ausgestaltungsvariante mit den Klemmfüßen 36 versehen, die an den Wandansätzen 33 auf der Unterseite des Basisteils 39 lösbar angebracht, z.B. verrastet, gesteckt und/oder verschraubt sind. Die Klemmfüße 36 können mit eingesetzten Verstärkungselementen versehen sein. Die Festlegung an den Stromsammelschienen 20 wird hierbei ebenfalls durch die Wirkung von Schraubenfedern auf die Anschlusskontakte 32 an den Kontaktierfedern 72 verstärkt. Die Wandansätze 33 bilden seitliche Begrenzungen für aufgenommene Stromsammelschienen 20. Mindestens eine Stromsammelschiene wird auf ihrer dem Wandansatz 33 gegenüberliegenden Längsseite mittels eines Verriegelungselementes 37 gesichert, das in dem Basisteil 39 senkrecht zu dessen Unterseite verschiebbar oder schwenkbar gelagert und mittels Federkraft nach außen gedrückt wird. Das Verriegelungselement 37 weist für verschiedene Breiten von Sammelschienen mehrere Abstufungen auf und kann mittels einer Handhabe 37.1 in der Oberseite des Schmalseitenabschnittes 34 durch eine Schwenkbewegung oder eine Verschiebebewegung parallel zur Längsausrichtung des Basisteils 39 über eine Rastschräge entgegen der Federkraft nach innen verschoben werden, um den Adapter 30 zu entriegeln. Das Verriegelungselement 37 und gegebenenfalls auch die Handhabe 37.1 können aus dem Basisteil entnommen bzw. als separate Teile in dieses eingesetzt werden.

## Patentansprüche

1. Geräte- oder Anschlussadapter (30) mit einem Basisteil (39), in dem Kontaktiereinheiten (70) mit Anschlusskontakten (32) zur elektrischen Kontaktierung mit Stromsammelschienen (20) eines Sammelschienensystems aufgenommen sind, und mit einer Haltevorrichtung zum lösbaren Festlegen des Geräteadapters (30) bezüglich des Sammelschienensystems,
**dadurch gekennzeichnet,**
**dass** die Haltevorrichtung unterschiedliche modulartige, an dem Basisteil (39) zumindest zum Teil lösbar anbringbare Verbindungsmittel (40, 50) und Klemmfüße (36) aufweist, um den Geräteadapter (30) wahlweise an einer Tragvörrichtung des Sammelschienensystems oder unmittelbar an mindestens einer Stromsammelschiene (20) mechanisch festzulegen.

2. Adapter nach Anspruch 1,
**dadurch gekennzeichnet,**
**dass** ein Teil der Verbindungsmittel (40) auf einer Schmalseite an dem länglich und näherungsweise quaderförmig geformten Basisteil (39) angebracht ist und ein weiterer Teil der Verbindungsmittel (50) auf der gegenüberliegenden Schmalseite des Basisteils (39) angebracht ist und
**dass** die Verbindungsmittel (50) zumindest einer Schmalseite Rastelemente aufweisen.

3. Adapter nach Anspruch 1 oder 2,
**dadurch gekennzeichnet,**
**dass** die sich gegenüberliegenden Verbindungsmittel (40, 50) beider Schmalseiten des Geräteadapters (30) gegeneinander gerichtete oder voneinander weg gerichtete Verbindungsabschnitte besitzen.

4. Adapter nach einem der vorhergehenden Ansprüche,
**dadurch gekennzeichnet,**
**dass** zumindest auf einer Schmalseite des Geräteadapters (30) das oder die Verbindungsmittel (50) an einem mit dem Basisteil (39) lösbar verbundenen oder verbindbaren Ansatzstück (35) angebracht ist/sind.

5. Adapter nach Anspruch 4,
**dadurch gekennzeichnet,**
**dass** das mindestens eine Ansatzstück (35) mit dem Basisteil (39) im angekoppelten Zustand verrastet, zusammengesteckt und/oder verschraubt ist.

6. Adapter nach einem der vorhergehenden Ansprüche,
**dadurch gekennzeichnet,**
**dass** auf einer Schmalseite des Geräteadapters (30) das Verbindungsmittel (40) einstückig mit dem Basisteil (39) über einen daran angeformten Schmalseitenabschnitt (34) verbunden ist.

7. Adapter nach einem der vorhergehenden Ansprüche,
**dadurch gekennzeichnet,**
**dass** der mindestens eine Klemmfuß (36) hakenförmig zum Hintergreifen der zugeordneten Stromsammelschiene (20) an der betreffenden Unterseite des Basisteils (39) lösbar angebracht oder anbringbar ist.

8. Adapter nach Anspruch 7,
**dadurch gekennzeichnet,**
**dass** der mindestens eine Klemmfuß (36) an einem an der Unterseite des Basisteils (39) angeformten Wandansatz (33) verrastet, angeschraubt und/oder angesteckt ist.

9. Adapter nach Anspruch 8,
**dadurch gekennzeichnet,**
**dass** der Wandansatz (33) eine Sammelschienenaufnahme (31) an der Unterseite des Basisteils (39) seitlich begrenzt.

10. Adapter nach Anspruch 9,
**dadurch gekennzeichnet,**
**dass** zur seitlichen Begrenzung einer dem Wandansatz (33) zugekehrten Seite gegenüberliegenden Seite einer zuzuordnenden Stromsammelschiene (20) in mindestens eine Sammelschienenaufnahme (31) ein senkrecht zur Unterseite des Basisteils (39) verstellbares oder verschwenkbares Verriegelungselement (37) hineinragt, das in dem Basisteil (39) gelagert ist.

11. Adapter nach Anspruch 10,
**dadurch gekennzeichnet,**
**dass** das Verriegelungselement (37) entfernbar ist.

12. Adapter nach einem der vorhergehenden Ansprüche,
**dadurch gekennzeichnet,**
**dass** zur elektrischen Kontaktierung mit den Stromsammelschienen (20) die Anschlusskontakte (32) in dem Basisteil (39) federnd abgestützt sind.

13. Verwendung eines Geräte- oder Anschlussadapters (30) nach einem der vorhergehenden Ansprüche, bei einem Sammelschienensystem mit einer Montageeinheit (10), die in isolierenden Sammelschienenhaltern oder einer isolierenden Plattform (11) mehrere beabstandete Stromsammelschienen aufnimmt.

14. Verwendung nach Anspruch 13,
**dadurch gekennzeichnet,**
**dass** die als Rastelemente ausgebildeten Verbindungsmittel (50) der Ge-räte- oder Anschlussadapter (30) in dem Geräte- oder Anschlussadapter (30) abgefedert und begrenzt parallel zu der Befestigungsfläche der Montageeinheit (10) und senkrecht zu den Stromsammelschienen (20) verstellbar sind und dass die mit einer Rastschräge und Rastnase (51) versehenen Rastelemente (50) der Geräte- oder Anschlussadapter (30) beim Aufsetzen des Geräte- oder Anschlussadapters (30) auf die Montageeinheit (10) in eine Rastaufnahme der Plattform (11) der Montageeinheit (10) oder eine Rastaufnahme eines Sammelschienenhalters (8) einrasten.

## Claims

1. A device or connection adapter (30) having a base part (39), in which contact-making units (70) with connection contacts (32) are accommodated for the purpose of making electrical contacts with bus bars (20) of a bus bar system, and having a holding apparatus for detachably fixing the device adapter (30) with respect to the bus bar system, **characterized in that** the holding apparatus has different, modular connecting means (40, 50) and clamping feet (36), at least some of which can be fitting detachably to the base part (39), in order to selectively mechanically fix the device adapter (30) either to a supporting apparatus of the bus bar system or directly to at least one bus bar.

2. The adapter of claim 1, **characterized in that** a portion of the connecting means (40) is mounted to a narrow side at the elongated and approximately rectangular-shaped base part (39) and a further portion of the connecting means (50) is mounted to the opposite narrow side of the base part (39) and that the connecting means (50) of at least one narrow side comprise latch elements.

3. The adapter of claim 1 or 2, **characterized in that** the opposed connecting means (40, 50) of both narrow sides of the device adapter (30) possess connecting sections which are directed against each other or are directed away from each other.

4. The adapter of any of the preceding claims, **characterized in that** at least at one narrow side of the device adapter (30) the connecting means (50) are mounted to an extension piece (35) removably attached or attachably to the base part (39).

5. The adapter of claim 4, **characterized in that** the at least one extension piece (35) is latched, plugged into and/or screwed to the base part (39) in a coupled state.

6. The adapter of any of the preceding claims, **characterized in that** at a narrow side of the device adapter (30) the connecting means (40) is integrally connected to the base part (39) via a narrow side section (34) molded thereto.

7. The adapter of any of the preceding claims, **characterized in that** the at least one clamping foot (36) is detachably mounted to or may be mounted to the respective bottom side of the base part (39) in a hook-formed manner for engaging behind the associated bus bar (20).

8. The adapter of claim 7, **characterized in that** the at least one clamping foot (36) is latched, screwed to and/or plugged into a wall tab (33) molded to the bottom side of the base part (39).

9. The adapter claim 8, **characterized in that** the wall tab (33) laterally binds a bus bar section (31) at the bottom side of the base part (39).

10. The adapter of claim 9, **characterized in that** for laterally binding a side opposite to a side facing to the wall tab (33) of an associated bus bar (20), a locking element (37) protrudes into at least one bus bar receptacle (31) which is perpendicularly movable or pivotable with respect to the bottom side of the base part (39), which locking element (37) is seated in said base part (39).

11. The adapter of claim 10, **characterized in that** the locking element (37) can be removed.

12. The adapter of any of the preceding claims, **characterized in that** for electrical contacting the bus bars (20), connection contacts (32) in the base part (39) are resiliently supported.

13. The use of a device or connection adapter (30) of any of the preceding claims in a bus bar system comprising a mounting unit (10), which receives several spaced bus bars within isolated bus bar holders or in an isolated platform (11).

14. The use of claim 13, **characterized in that** the connecting means (50) of the device or connection adapters (30) within the device or connection adapter (30) formed as latching elements are sprung and may be, within boundaries, moved parallel to the mounting surface of the mounting unit (10) and perpendicular to the bus bars (20) and that the latching elements (50) of the device or connection adapters (30) provided with a latch taper and latch nose (51) latch, when putting the device or connection adapter (30) to the mounting unit (10), may be latched into a latch receptacle of the platform (11) of the mounting unit (10) or into a latch receptacle of a bus bar holder (8).

## Revendications

1. Adaptateur d'appareil ou de branchement (30) comprenant une partie de base (39), dans lequel des unités de mise en contact (70) dotées de contact de branchement (32) sont réceptionnées pour la mise en contact électrique avec des rails collecteurs de courant (20) d'un système de rails collecteurs, et dotées d'un dispositif de retenue pour la fixation amovible de l'adaptateur d'appareil (30) par rapport au système de rails collecteurs,
**caractérisé**
**en ce que** le dispositif de retenue présente différents moyens de liaison (40, 50) et pieds de serrage (36) de type module, pouvant être placés au moins de façon partiellement amovible sur la partie de base (39), afin de fixer mécaniquement l'adaptateur d'appareil (30) au choix sur un dispositif porteur du système de rails collecteurs ou directement sur au moins un rail collecteur de courant (20).

2. Adaptateur selon la revendication 1,
**caractérisé**
**en ce qu'**une partie des moyens de liaison (40) est placée sur un côté étroit sur la partie de base (39) de forme allongée approximativement carrée et une autre partie des moyens de liaison (50) est placée sur le côté étroit opposé de la partie de base (39) et
**en ce que** les moyens de liaison (50) d'au moins un côté étroit présentent des éléments d'encliquetage.

3. Adaptateur selon la revendication 1 ou 2,
**caractérisé**
**en ce que** les moyens de liaison (40, 50) se faisant face des deux côtés étroits de l'adaptateur d'appareil (30) présentent des parties de liaison orientées les unes vers les autres ou orientées en partant les unes des autres.

4. Adaptateur selon l'une des revendications précédentes,
**caractérisé**
**en ce que**, au moins sur un côté étroit de l'adaptateur d'appareil (30), le ou les moyens de liaison (50) est/sont placé(s) sur une pièce rapportée (35) reliée ou pouvant être reliée de façon amovible à la partie de base (39).

5. Adaptateur selon la revendication 4,
**caractérisé**
**en ce que** la au moins une partie rapportée (35) est encliquetée, emboîtée et/ou vissée avec la partie de base (39) dans l'état accouplé.

6. Adaptateur selon l'une des revendications précédentes,
**caractérisé**
**en ce que**, sur un côté étroit de l'adaptateur d'appareil (30), le moyen de liaison (40) est relié d'une seule pièce à la partie de base (39) par l'intermédiaire d'une partie de côté étroit (34) formée dessus.

7. Adaptateur selon l'une des revendications précédentes,
**caractérisé**
**en ce que** le au moins un pied de base (36) est placé ou peut être placé de façon amovible en forme de crochet pour saisir par l'arrière le rail collecteur de courant (20) associé sur le côté inférieur concerné de la partie de base (39).

8. Adaptateur selon la revendication 7,
**caractérisé**
**en ce que** le au moins un pied de base (36) est encliqueté, vissé et/ou enfiché sur une embase murale (33) formée sur le côté inférieur de la partie de base (39).

9. Adaptateur selon la revendication 8,
**caractérisé**
**en ce que** l'embase murale (33) délimite latéralement un logement de rail collecteur (31) sur le côté inférieur de la partie de base (39).

10. Adaptateur selon la revendication 9,
**caractérisé**
**en ce que**, pour délimiter latéralement un côté, opposé au côté tourné vers l'embase murale (33), d'un rail collecteur de courant (20) à associer, un élément de verrouillage (37), qui est monté dans la partie de base (39), réglable ou basculant perpendiculairement au côté inférieur de la partie de base (39) dépasse à l'intérieur d'au moins un logement de rails collecteurs (31).

11. Adaptateur selon la revendication 10,
**caractérisé**
**en ce que** l'élément de verrouillage (37) peut être enlevé.

12. Adaptateur selon l'une des revendications précédentes,
**caractérisé**
**en ce que**, pour la mise en contact électrique avec les rails collecteurs de courant (20), les contacts de branchement (32) sont soutenus de façon élastique dans la partie de base (39).

13. Utilisation d'un adaptateur d'appareil ou de branchement (30) selon l'une des revendications précédentes, dans le cas d'un système de rails collecteurs avec une unité de montage (10), qui reçoit plusieurs rails collecteurs de courant espacés dans des supports isolants de rails collecteurs ou dans une plateforme (11) isolante.

14. Utilisation selon la revendication 13,
**caractérisé**
**en ce que** les moyens de liaison (50), conçus comme élément d'encliquetage, des adaptateurs d'appareil ou de branchement (30) sont montés sur ressort dans l'adaptateur d'appareil ou de branchement (30) et sont réglables de façon limitée parallèlement à la surface de fixation de l'unité de montage (10) et perpendiculairement aux rails collecteurs de courant (20) et en ce que les éléments d'encliquetage (50), dotés d'un chanfrein et d'un ergot d'encliquetage (51), des adaptateurs d'appareil ou de branchement (30) s'enclenchent, lors de la pose de l'adaptateur d'appareil ou de branchement (30), sur l'unité de montage (10) dans un logement d'encliquetage de la plateforme (11) de l'unité de montage (10) ou un logement d'encliquetage d'un support de rails collecteurs (8).
